# EUROPEAN PATENT APPLICATION

(11) **EP 1 868 385 A1**
(43) Date of publication of application: **19.12.2007**
(21) Application number: 06012387.4
(22) Date of filing: 16.06.2006
(51) Int. Cl.: H04N 7/173, H04N 5/445

(54) **Electronic program guide**

(71) Applicant: NOKIA SIEMENS NETWORKS GMBH & CO. KG, 81541 München (DE)
(72) Inventor: Feyaerts, Johan, 2370 Arendonk (BE)
(74) Representative: Fischer, Michael

(57) **Abstract**

In order to provide end users with an individualized electronic program guide, a plurality of client devices is connected to a back end system. Each client device is operable by an end user. User information, which is related to content of at least one end user is collected. Individual preferences content preferences of one or several end users is determined. Taking into account the determined content preferences of the end user, the individualized program guide is generated. The individualized program guide is then made available to the client device of the respective end user.

## Description

This invention relates to a method for providing end users with an individualized electronic program guide according to claim 1, and to an electronic program guide system according to claim 10.

Currently electronic program guides are available in interactive television systems. Known electronic program guides thereby submit an index to all end users. The index comprises several index entries. An index entry comprises for example information about a television show, like for example the name of the television show, the channel that emits the show and the time, when the show is to be broadcasted. Nowadays electronic program guides allow an end user to add a tag to an index entry, which can be read by the other end users. In a typical example the content of the tag is a rating of the entry, thus a rating of the television show. However, not all users have the same taste concerning television programs. It is therefore a drawback of the existing program guides, that a tag generally is valuable information for only a minor part of the end users.

It is therefore the objective of this invention for providing end users with an individualized electronic program guide.

This objective is achieved according to the present invention by the measures taken according to anyone of the claims 1 and 10.

In order to provide end users with an individualized electronic program guide, a plurality of client devices is connected to a back end system. Each client device is operable by an end user. User information, which is related to content of at least one end user is collected. Individual preferences content preferences of one or several end users is determined. Taking into account the determined content preferences of the end user, the individualized program guide is generated. The individualized program guide is then made available to the client device of the respective end user.

According to a first preferred embodiment of the invention, the content preferences of the end user are taken into account by statistically consolidating the user information.

This can be done by consolidating the user information of one specific user and generating the individualized program guide by taking into account only the consolidated user information of this specific user. As an example, if in the back end system it is registered, that the end user often watches movies of a specific genre, the individualized program guide can recommend all movies of this specific genre, which are to be broadcasted in the next 5 days, to the specific end user.

The consolidating can also be done, by consolidating the user information of a group of users, who in the past had similar user preferences. This way it is possible to recommend content which is likely to be of interest for an end user, but the interest is not so easy to forecast as in the case of recommending movies of the a specific genre. For example, a new comedy show with a specific kind of humor can this way be proposed to an end user because other end users, who were watching the same shows in the past, seem to like this comedy show.

According to a second preferred embodiment, the user information is collected by automatically registering an identification of a content (e.g. a television program) that was consumed by the end user. For example, in case of television broadcast, the information can automatically be collected, when the client device is switched to a specific television program. Analogously, in case the content is downloadable on demand, the information is automatically collected, when the client device downloads the content.

In a third preferred embodiment, the back end system is connected to the client devices by means of a multimedia broadcast network, for example by means of a bi-directional television broadcast network. This way, the multimedia broadcast network, which is normally used to transmit multimedia content to the client device, can also be used for transmitting the program guide to the client device and for transmitting user information to the back end system.

According to a fourth preferred embodiment a community is created by creating a data structure in the back end system. The data structure logically subsumes at least a subset of the plurality of client devices and/or end users. For example client devices of end users with identical or similar content preferences can be subsumed in the community. Therefore user information related to content preferences of the end users which correspond to the client devices of the subset is collected.

In a fifth preferred embodiment the program guide is a community specific program index which comprises index entries. An index entry identifies content, for example a television program which is to be broadcasted. In order to individualize the program guide, the program index displays content of high popularity within the community first and/or adds a code, a number or some other form of indication to an index entry, representing a popularity of the corresponding content within the community.

According to a sixth preferred embodiment the content preferences of the end user are taken into account by adding the user information to the individualized program guide. This way an end user of a community can for example rate or add a comment to a specific piece of content. Since the rating or the comment is not of high interest for non-members of the community, the rating or the comment can be made accessible only to members of the community.

The invention is in the following described, based on embodiments which are exemplified figures.

Figure 1 An electronic program guide system for providing end users with an individualized electronic program guide in a seventh embodiment;

Figure 2 An electronic program guide system for providing end users with an individualized electronic program guide in an eight embodiment.

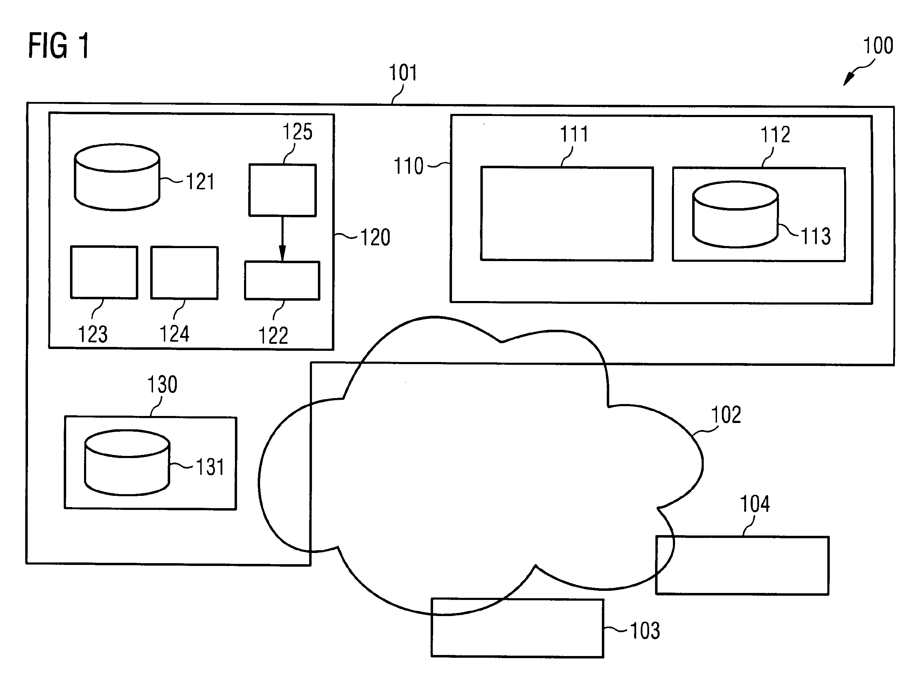

Figure 1 shows an electronic program guide system 100 for providing end users with an individualized electronic program guide in a seventh preferred embodiment of the invention. The electronic program guide system 100 comprises a back end system 101 which is connected by means of a network 102 to a plurality of client devices 103, 104. Each client device 103, 104 is operable by an end user. The client devices are used for the reception of content like for example TV broadcast, video on demand or audio download. A client device 103, 104 is for example a set top box, or a set top box that is integrated into a TV set or a multimedia handset that communicates with the back end system 101. The back end system 101 comprises a community service system 110, a multimedia distribution system 120 and at least one community info processing device 130. In a preferred variant of the embodiment, information about the users' content preferences is automatically detectable by each client device and transmittable via the network 102 to the back end system 101.

The community service system 110 comprises software components, for example an registration component 111 and a group list management component 112. The registration component 111 allows the user to identify himself. The registration component can for example be an instant messaging system in which the user registers himself or any other form of authentication system. In this way the backend system can keep track when the user is logged on. The group list management component 112 administrates communities, which includes to register the communities for which the end user has a membership. Therefore the group list management component 112 comprises a data structure 113 which logically subsumes client devices and/or their users in order to generate communities. An end user can belong to one or more communities.

The multimedia distribution system 120 comprises a program guide content database 121, an index enhancer 122 and at least one usage monitoring component 123, 124. The program guide content database 121 is able to store program guide content, e.g. information about television programs which are to be broadcasted.

The usage monitoring components 123, 124 register the content preferences of the end user. This can for example be done by registering in the usage monitoring component 123, 124 all broadcasted programs that have been chosen by a client device 103, 104.

The usage monitoring components 123, 124 therefore create user information in the form of information elements that reflect the content preferences of the end user. As an example, an information element comprises a reference to the program that has been consumed by an end user together with an identification of the end user or of the user's client device. Instead of the identification of the end user, an information element can also comprise an identification of the community an end user belongs to. Further examples of information elements are:
- Which television channel a user is watching at a certain moment in time: Information elements indicating a channel change will be generated. The information elements contain references to the new and the old channel, time of the switch
- Which Movies or other information a user is accessing on demand at a certain time: Information elements containing a unique identifier for the movie or multimedia item will be generated. The monitoring can happen on any type of multimedia content, for example audio files, video files, archives or documents.
- Information elements may also be generated when the user does a manual action, for example enters a rating of the content he has been viewing or hearing.

The community info processing device 130 collects the information elements originating from the usage monitoring components 123, 124 and consolidates them. The consolidated results are then published so that they can be used in external applications that communicate with this community info processing device 130, for example with the group list management component 112. The consolidating of the information elements will make sure that the information can be sent in a consolidated form to the external applications. During the processing the community info processing device 130 takes into account to which communities a user belongs at the moment the monitoring information is generated. The community info processing device 130 can also comprise a data base 131 for storing information elements and/or consolidated information. The database can for example part of or connected to a presence server, which helps to keep a history of the usage of the television programs or multimedia content. Examples of processing and consolidating of monitoring information elements are:
- count the number of times persons within a community have accessed a certain piece of multimedia content. Usage counting.
- Calculate the chance that a member of a community will like a piece of content based on the usage statistics derived from the monitoring information elements originating from the other user's within the same community that have accessed the content.
- Record the identities of the last 'x' users within the community that have accessed a certain piece of content.
- Record for each user within a community the last 'x' content items he accessed/downloaded
- Record a list of content items that gets the highest rating from the community (top list).

The consolidated information is then transmitted from the community info processing device 130 to the index enhancer 122. In addition, the index enhancer has access to the program guide content database 121. If for example the consolidated information indicates that a certain television show is popular within a community, this consolidated information is used to generate a program guide index, which presents the index entry for this television show on a prominent position.

On the client devices 103, 104 different program indexes may be shown that allow the user to select content like for example television programs or content on demand. A program index comprises index entries which identify for example a television program or a multimedia content. These program indexes are enriched with consolidated information that is published by the community info processing device 130. The consolidated information can be presented in the user interface for example as star ratings, icons on which the user can click or numbers showing how many other users of the community are watching the specific multimedia item. The index enhancer 122, which can be located on a client device 103, 104 or in the back end system, receives information from the program guide content database 121 and from the community info processing device 130. The index enhancer 122 makes sure that the consolidated information is associated correctly with the content from the program guide content database 121. Therefore the index entries are also associated with the user that is currently logged in on the client device so that he sees only the additional information that is associated with the communities of which he is a member.

Additionally, software components may also generate new program indexes that allow a user of a community to see a selected number of multimedia items based on the published information of the community info processing device 130. The order of the elements in the index and the selection multimedia items to which references appear in the index may depend on the information published by the community info processing devices. An example is a top list index where only the ten most popular downloadable movies are shown for the communities of which the logged in user is a member.

This embodiment enables the presentation of additional information regarding the content preferences of an end user in a program guide index. The additional information is based on the membership of the user in communities and recorded usage data of the multimedia content items represented in the program guide index. Additionally it is possible to build up new indexes which are based on usage data. Thereby the community membership of the user and usage data can be taken into account. For example, the program guide can act like an automatic dynamic favorites list, which will stimulate usage of the multimedia system because people within a community are assumed to have common interests.

In order to generate a program index 125 that is adapted to an end user's interest, the usage monitoring component 123, 124 does not need to be located in the multimedia distribution system 120. Instead or in addition, a usage monitoring component can also be situated in a client device 103, 104 or at any other location of the back end system 101 and transmit information elements to the community info processing device 130.

Also the index enhancer 122 does not need to be situated in the multimedia distribution system. Instead, each of the client devices can comprise an index enhancer which associates the consolidated information from the community info processing device with the information from the program guide content database 121.

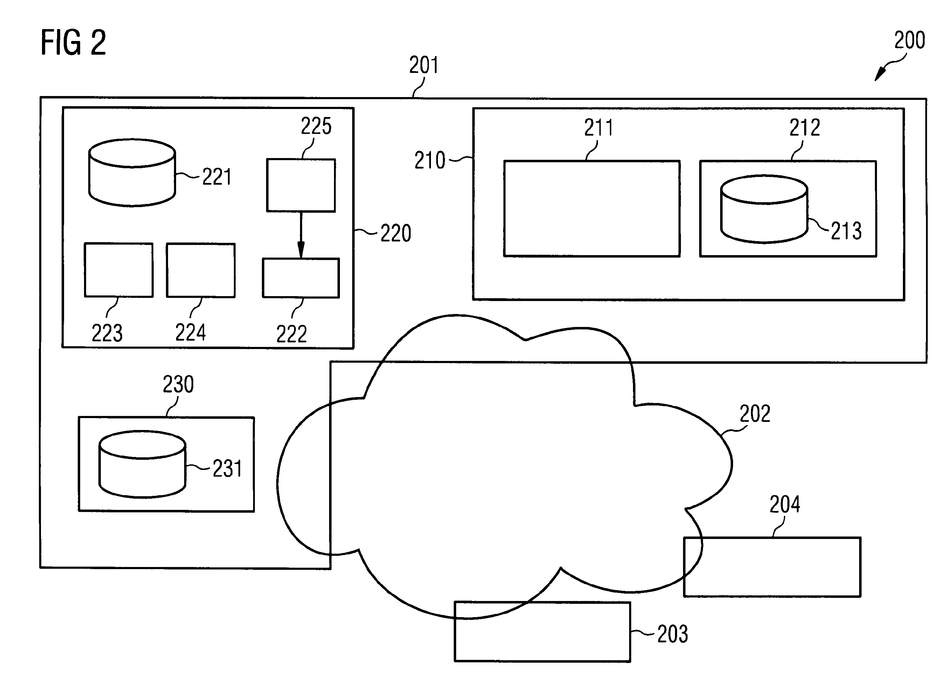

Figure 2 shows an electronic program guide system 200 for providing end users with an individualized electronic program index 225 in an eighth embodiment. The electronic program guide system 200 comprises a back end system 201 which is connected by means of a network 202 to a plurality of client devices 203, 204. The back end system 201 comprises a community service system 210, a program guide system 220 and at least one tagging component 230.

The back end system 201 and the client devices 203, 204 can comprise basically the same elements as the back end system 101 and the client devices 103, 104 of figure 1. However, additionally or instead of the community info processing device 130, the back end system 201 comprises a tagging component 230.

The tagging component 230 receives tagging information from the client devices 203 of a first end user for distributing this tagging information to client devices of other end users. In other words, the tagging component 230 serves to collect the content preferences of the first end user by adding the user information to the individualized program guide. This way, if the first end user is for example a member of a community, he can write a comment about a television program. The comment will then be added to a program guide for this community.

The tagging component 230 thus allows the first end user to add tags to multimedia items, in particular to an index entry. The data part of a tag can consist of any type of content or combination of content, for example:
- a piece of free text in which a user gives his opinion about the content,
- an audio fragment which a user recorded in which he tells his opinion about the content,
- a video fragment which a user has recorded with a web cam expressing his feelings about the content item, or
- a document.

In addition to the tag, further meta information may be associated like for example:
- the target audience for which the tag (community as a whole, a selected number of users, everyone) is intended,
- an identifier that uniquely identifies to which piece of multimedia content the tag belongs, or
- The creation date/time.

The data part of the tag may be entered into a client device by the end user when he creates the tag or may partially or completely be filled in automatically by the tagging component 230, for example by deriving the user id from a network address.

The tagging component 230 may receive tags via any possible communications channel. If necessary it may perform data and metadata conversions on the tag before it stores this tag in its database 231 or distributes the tag to other applications. Examples of communications channels through which the tagging component 230 may receive tags are SMS, MMS, SIP session, file transfer, directly streamed connection, electronic mail, electronic mail with MIME extensions or other forms of attachments, video streams from a camera with or without associated metadata, hypertext transfer protocol.

The client device presents program indexes that allow the end users to select the multimedia content they want to consume. The tagging component 230 provides an interface to the index enhancer 222 through which the enhancer can retrieve the tags that are necessary to build up an individualized electronic program guide. The index enhancer 222 can be located on client devices or in the back end system. The index enhancer 222 uses the tags in order to generate an individualized program guide index with an index entry that comprises the tags or a reference to the tags.

The program guide index shown in a user interface of the client device may show the content of the tags directly or may show indications that additional tagging information is available for the multimedia item. In the second case the user may then navigate by means of the user interface to the tagging information and look at it in more detail.

The index enhancer 222 may be located on the client device or on server devices in the backend. The tagging information may optionally be cached on the client device if necessary. The index enhancer 222 decides then which tags need to be attached to which program guide index. This selection process can take into account filter criteria like for example:
- the user id of the user currently requesting the tagged index,
- the tag display filter criteria of the user defined in his personal profile, for example the tag, creation date, or the originator,
- the communities of which the user currently logged in on the device is a member,
- capabilities of the user interface in a client device, or
- Capabilities of the client device, capabilities of the network connection between the client device and the backend.

The index enhancer 222 retrieves the tagging information from the tagging component 230. Therefore it sends the different filter criteria to the tagging component 230, in order to forward the tags or references to the tags needed for the individualization of the program index.

The index enhancer 222 may also adapt the program guide index itself so that for example the resulting index contains only those multimedia item references to which tags are attached that fulfill the filtering criteria of the user requesting the index.

An other use case of tags is to display them when the user is consuming the content. For example a user may attach a text tag to a scene of a movie that is to be displayed in an overlay or subtitle when an other user of the community is watching that particular scene in the movie.

### List of reference signs

- 100, 200: electronic program guide system
- 101, 201: back end system
- 102, 202: network, broadcast network
- 103, 203: client device
- 104, 204: client device
- 110, 210: community service system
- 111, 211: registration component
- 112, 212: group list management component
- 113, 213: data structure
- 120, 220: multimedia distribution system
- 121, 221,: program guide content database
- 122, 222: index enhancer
- 123, 223: usage monitoring component
- 124, 224: usage monitoring component
- 125, 225: program index
- 130: community info processing device
- 131: data base
- 230: tagging component
- 231: data base

## Claims

1. Method for providing end users with an individualized electronic program guide, comprising the steps of:
a) connecting a plurality of client devices to a back end system, whereas each client device is operable by an end user;
b) collecting user information related to content preferences of at least one end user and determining its individual content preferences;
c) generating the individualized program guide, taking into account the determined content preferences of the end user; and
d) making available the individualized program guide to the client device of the respective end user.

2. Method according to claim 1,
**characterized in that**
the content preferences of the end user are taken into account by statistically consolidating the user information.

3. Method according to claim 1 or 2,
**characterized in that**
the user information is collected by automatically registering an identification of a content, preferably a multimedia content, preferably a broadcasted program, whereas said content or broadcasted program was consumed by the end user.

4. Method according to anyone of the preceding claims,
**characterized in that**
the back end system is connected to the client devices by means of a multimedia broadcast network, preferably by means of a television broadcast network.

5. Method according to anyone of the preceding claims
**characterized in that**
a community is created by creating a data structure in the back end system, said data structure logically subsuming at least a subset of the plurality of client devices and/or end users.

6. The method of claim 5,
**characterized in that**
the community is generated
by a mechanism, on the client device that can be triggered by the end user and/or
by determining the user information about the content preferences of at least one end user and/or the content preferences of a superset of the community's client devices is collected by generating the information in the client devices and transmitting the information to the back end system.

7. The method of 5 or 6,
**characterized in that**
program guide is a community specific program index, whereas the program index comprises index entries identifying content and the community specific program index
a) displays content of high popularity within the community first and/or
b) adds a code, a number or any form of indication to an index entry, representing a popularity of the corresponding content within the community.

8. The method of anyone of the claims 5 to 7,
**characterized in that**
the content preferences of the end user are taken into account by adding the user information to the individualized program guide.

9. The method of claim 8
**characterized in that** the user information is transmitted to the back end system by means of one or more channels, preferably by anyone or any combination of the channels such as SMS, MMS, SIP session, file transfer, directly streamed connection, electronic mail, electronic mail with MIME extensions or other forms of attachments, video streams from a camera with or without associated metadata and hypertext transfer protocol.

10. The method of anyone of the claims 5 to 9,
**characterized in that**
at least two different communities are created by generating two data structures, whereas each of the two data structures subsumes a different subset of the plurality of client devices.

11. Electronic program guide system (100, 200) comprising a back end system (101, 201),
a plurality of client devices (103, 104, 203, 204) whereas each client device (103, 104, 203, 204) is operable by an end user,
a network (102, 202) for connecting the plurality of client devices (103, 104, 203, 204) to the back end system (101, 201),
first means (123, 124, 130, 223, 224, 230) for collecting user information related to content preferences of at least one end user and determining its individual content preferences;
second means (122, 222) for generating the individualized program guide by taking into account the determined content preferences of the end user; and
third means (120, 220) for making available the individualized program guide to the client device of the respective end user.

12. Electronic program guide system (100, 200) according to claim 11,
**characterized by**
fourth means (130) for taking the content preferences of the end user into account by statistically consolidating the user information.

13. Electronic program guide system according to claim 11 or 12,
**characterized by**
fifth means (123, 124, 223, 224) for automatically registering an identification of a content, preferably a multimedia content, preferably a broadcasted program that was consumed by the end user.

14. Electronic program guide system according to anyone of the claims 11 to 13,
**characterized in that**
the network (102, 202) is a television broadcast network, connecting the back end system to the client devices.

15. Electronic program guide system according to anyone of the claims 11 to 14,
**characterized by**
sixth means (110, 210) for creating a community by creating a data structure (113, 213) in the back end system (101, 201), said data structure logically subsuming at least a subset of the plurality of client devices (103, 104, 203, 204), whereas the client devices (103, 104, 203, 204) of end users with identical or similar content preferences are subsumable in the community.

16. Electronic program guide system according to claim 15,
**characterized in that**
the first means are adapted to collect user information about the content preferences of at least a superset of the community's client devices.

17. Electronic program guide system according to claim 15 or 16,
**characterized in that**
the program guide is a community specific program index, whereas
the program index comprises index entries identifying content, and the community specific program index comprises
a) seventh means to present content of high popularity within the community first and/or
b) eight means to add a code, a number, or any other form of indication to an index entry, said code, number or indication representing a popularity of the corresponding content within the community.

18. Electronic program guide system according to anyone of the claims 11 to 15,
**characterized in that**
the content preferences of the end user are taken into account by adding the user information to the individualized program guide.

19. Electronic program guide system according to claim 18,
**characterized in that** the user information is transmittalbe to the back end system by means of one or more channels, preferably by anyone or any combination of the channels such as SMS, MMS, SIP session, file transfer, directly streamed connection, electronic mail, electronic mail with MIME extensions or other forms of attachments, video streams from a camera with or without associated metadata and hypertext transfer protocol.

20. Electronic program guide system according to anyone of the claims 15 to 19,
**characterized in that**
the sixth means (110, 210) are suited to create at least two different communities by generating two data structures (113, 213), whereas for each of the two data structures a different subset of the plurality of client devices is subsumable.
